# EUROPÄISCHE PATENTSCHRIFT

(11) **EP 2 293 968 B1**
(45) Veröffentlichungstag und Bekanntmachung des Hinweises auf die Patenterteilung: **26.10.2011**
(21) Anmeldenummer: 08874775.3
(22) Anmeldetag: 17.11.2008
(51) Int. Cl.: B62D 15/02, B62D 6/00

(54) **VORRICHTUNG UND VERFAHREN ZUM STEUERN EINER AUTOMATISCHEN LENKUNG EINES FAHRZEUG**
DEVICE AND METHOD FOR CONTROLLING AN AUTOMATIC STEERING SYSTEM OF A VEHICLE
DISPOSITIF ET PROCEDE DE COMMANDE DE LA DIRECTION AUTOMATIQUE D'UN VEHICULE

(30) Priorität: 27.06.2008 DE 102008002699
(43) Veröffentlichungstag der Anmeldung: 16.03.2011
(60) Teilanmeldung: 11176511.1
(73) Patentinhaber: Robert Bosch GmbH, 70442 Stuttgart (DE)
(72) Erfinder: NIEMZ, Volker, 71229 Leonberg (DE)
(86) Internationale Anmeldenummer: PCT/EP2008/065695
(87) Internationale Veröffentlichungsnummer: WO 2009/156002

(56) Entgegenhaltungen:
- EP-A- 1 561 673
- DE-A1- 19 902 096

## Beschreibung

Die Erfindung betrifft eine Vorrichtung und ein Verfahren zum Steuern einer automatischen Lenkung eines Fahrzeugs.

### Stand der Technik

Es ist bereits bekannt, Fahrzeuge mit einem automatischen Fahrzeugsteuersystem auszustatten. Ein derartiges automatisches Fahrzeugsteuersystem ist beispielsweise ein automatisches Spurhaltesystem oder ein Einparkassistent. Um dem Fahrer das Einparken in eine Parklücke zu erleichtern, ermittelt der Einparkassistent unter Berücksichtigung einer Ausdehnung der Parklücke und einer Lage des Fahrzeugs zu der Parklücke einen vorteilhaften Einparkweg. Beispielsweise besteht der Einparkweg aus einer Aneinanderreihung von Geraden, Kreisabschnitten und Klothoiden. Je nach der Dimensionierung und der Startpositionen können die Kreissegmente verschiedene konstante Lenkwinkelanforderungen bedingen. Die Wahrscheinlichkeit ist sogar sehr hoch, dass die Radien und somit der geforderte Lenkeinschlag stark variieren.

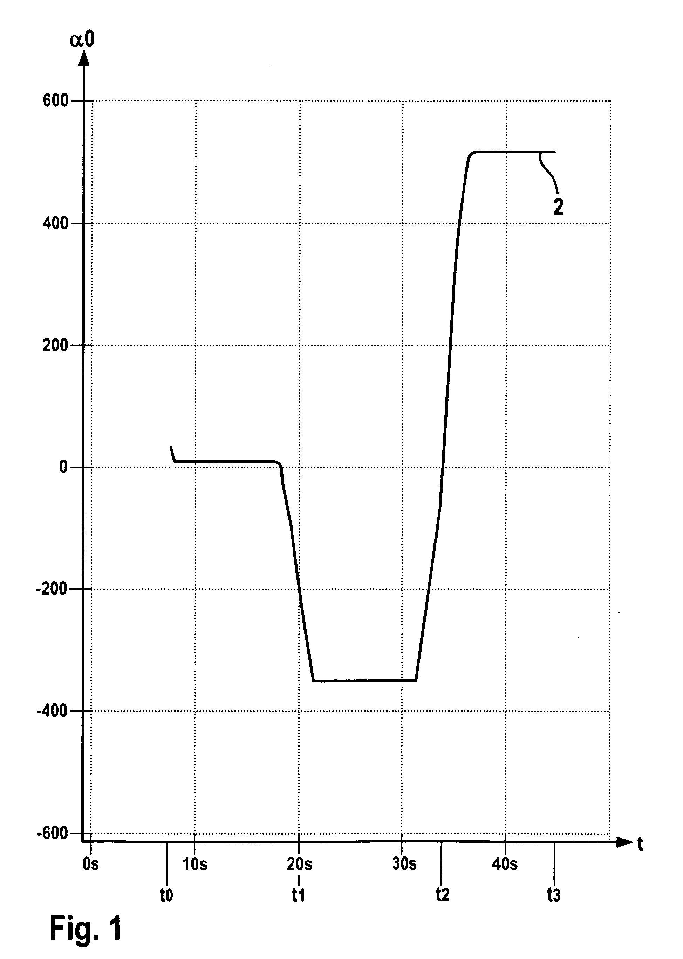

Fig. 1 zeigt ein Koordinatensystem zum Darstellen eines Beispiels für eine von einem Einparkassistenten ermittelte Lenkwinkelanforderung im zeitlichen Verlauf (Graph 2). Die Abszisse des Koordinatensystems ist die Zeitachse t. Die Ordinate gibt die Soll-Lenkradwinkel α0 an, welche zu den entsprechend Zeiten am Lenkrad bzw. am Lenkgestänge eingestellt werden müssen. Der Soll-Lenkradwinkel α0 entspricht dabei einer Lenkradwinkelanforderung.

Zu einem Zeitpunkt t0 wird der Einparkvorgang mit einem Soll-Lenkradwinkel α0 von 0° gestartet. Zu den Zeitpunkten t1 und t2 nimmt der Soll-Lenkradwinkel α0 andere Werte an, wobei das Lenkrad stark eingeschlagen werden soll. Die Bahnplanung des Einparkvorgangs sieht somit zwei Kreisbögen vor, auf welchen der Soll-Lenkradwinkel α0 stets konstant ist. Zum Zeitpunkt t3 ist der Einparkvorgang abgeschlossen. Sofern die bestimmte vorteilhafte Lenkwinkelanforderung eingehalten wird, ist davon auszugehen, dass sich das Fahrzeug zum Zeitpunkt t3 in einer vorteilhaften Stellung in der Parklücke befindet.

Ein ermittelter vorteilhafter Einparkweg, wie beispielsweise der zeitliche Verlauf der Lenkwinkelanforderung der Fig. 1, kann dem Fahrer durch Lenkanweisungen während des Einparkvorgangs mitgeteilt werden. Als Alternative dazu ist auch ein automatisches Ausführen des ermittelten vorteilhaften Einparkweges unter Verwendung eine automatische Lenkradführung möglich. Dabei werden während des Einparkens zu bestimmten Zeitpunkten, welche sich aus dem ermittelten vorteilhaften Einparkweg ergeben, die Soll-Fahrtrichtungen (z.B. Soll-Lenkeinschläge) des vorteilhaften Einparkwegs automatisch eingestellt. Beispielsweise wird zu den Zeitpunkten t0 bis t3 der jeweilige vorgegebene Soll-Lenkradwinkel α0 automatisch eingestellt. Dies erleichtert dem Fahrer das Einparken in die Parklücke zusätzlich.

Eine geeignete automatische Lenkradführung kann beispielsweise durch eine elektronische Lenkung (Electronic Steering Chassis ESC/ Electro-mechanic Power-assist Steering EPS) realisiert werden. Allerdings erfordert ein sicheres Einhalten des vorteilhaften Einparkwegs ein relativ genaues Einhalten der vorgegebenen Soll-Fahrtrichtungen. Dies stellt hohe Anforderungen an die elektronische Lenkung.

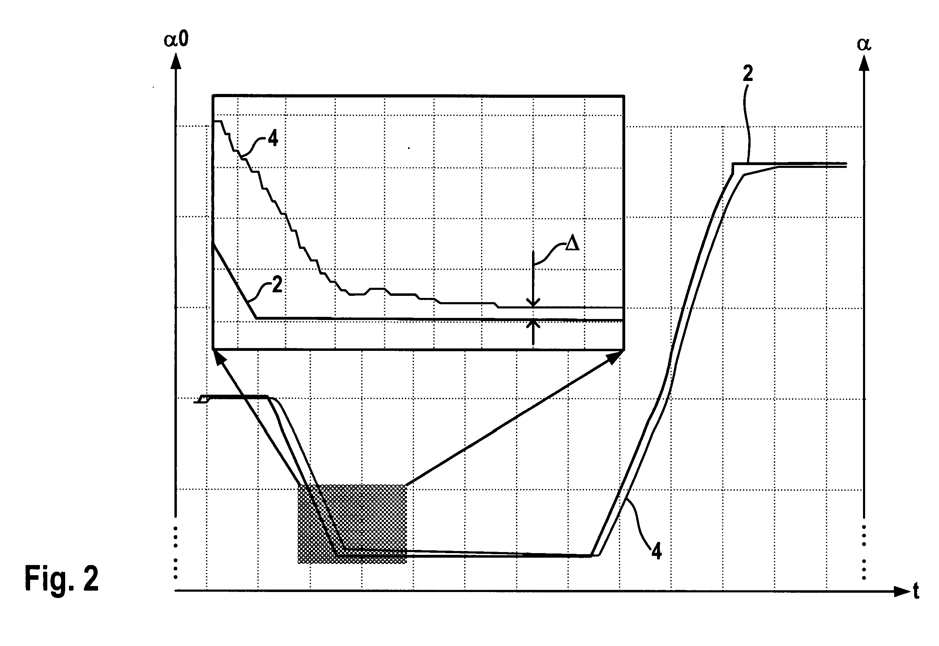

Die bestimmten Soll-Lenkradwinkel α0 können jedoch in der Praxis oft nicht eingehalten werden. Fig. 2 zeigt ein Koordinatensystem zum Darstellen eines Beispiels für ein ungenaues Einhalten der vorgegebenen Soll-Lenkradwinkel α0 der Fig. 1. Die Abszisse und die Ordinate des Koordinatensystems entsprechen, wie oben bei der Fig. 1, der Zeitachse t und den bestimmten Soll-Lenkradwinkeln α0. Die Ordinate gibt auch die ermittelten Ist-Lenkradwinkel α während eines Abfahrens des vorgegebenen Einparkwegs durch ein Fahrzeug mit einer elektronischen Lenkung an. Zur besseren Veranschaulichung ist ein Teilausschnitt der Fig. 2 vergrößert dargestellt.

Der Graph 4 gibt die Ist-Lenkradwinkel α an, welche zu einer Zeit t tatsächlich über die elektrische Lenkung am Lenkrad eingestellt sind. Wie beim Vergleich der Graphen 2 und 4 deutlich wird, werden die von dem Einparkassistenten vorgegebene Soll-Lenkradwinkel α0 durch die elektrische Lenkung nur ungenau eingehalten. Beispielsweise kann der für einen Soll-Lenkradwinkel α0 von 300° eingestellte Ist-Lenkradwinkel α nur 295° betragen. Erfolgt keine Korrektur der Differenz von 5° zwischen dem Soll-Lenkradwinkel α0 und dem Ist-Lenkradwinkel α, so kann dies zu deutlichen Abweichungen beim Abfahren des vorgegebenen Einparkwegs führen.

Zusätzlich ergeben sich besonders für sehr enge Parklücken Einparkwege mit vergleichsweise großen Lenkeinschlägen.

Fehler beim Einstellen der gewünschten Soll-Fahrtrichtung können häufig durch ein Eingreifen des Fahrers nicht mehr korrigiert werden. Dies macht in vielen Fällen einen vorzeitigen Abbruch des Einparkvorgangs erforderlich. Zusätzlich kann das Abweichen des Fahrzeugs von dem ermittelten vorteilhaften Einparkweg zu einer Kollision, beispielsweise mit einem benachbart geparkten Fahrzeug, führen.

Die EP 1 650 103 A2 beschreibt ein Lenksystem für ein Fahrzeug, bei welchem eine Gierrate mit einem Lenkwinkel verglichen wird. Anschließend kann die Fahrtrichtung des Fahrzeugs so korrigiert werden, dass der Lenkwinkel mit der Gierrate übereinstimmt. Allerdings muss das Signal der Gierrate dabei aufgrund des Rauschens des Sensors stark gefiltert werden. Dies führt zu einer zeitlichen Verzögerung. Zusätzlich kann eine verlässliche Gierrate nur bei vergleichsweise großen Geschwindigkeiten ermittelt werden. Des Weiteren erfordert das Ermitteln der möglicherweise vorliegenden Abweichungen zwischen der Gierrate und dem Lenkwinkel und die anschließend ausgeführte Korrektur der Fahrtrichtung relativ viel Zeit.

Weiteirhin offenbart das Dokument DE 199 02 096 A1 eine Vorrichtung zum Steuern einer Lenkung eines Fahrzeugs mit einem Signaleingang, welcher dazu ausgelegt ist, eine vorgegebenen Soll-Fahrtrichtungröße zu empfangen, mit einer Speichereinrichtung, auf welcher ein Korrekturfaktor ablesbar abgespeichert ist und mit einer Steuereinrichtung, welche dazu ausgelegt ist, eine korrigierte Soll-Fahrtrichtungsgröße anhand des Korrekturfaktors zu ermitteln, sowie ein entsprechender Verfahren.

### Offenbarung der Erfindung

Die Erfindung schafft eine Vorrichtung zum Steuern einer automatischen Lenkung eines Fahrzeugs mit den Merkmalen des Anspruchs 1 und ein Verfahren zum Steuern einer automatischen Lenkung eines Fahrzeugs mit den Merkmalen des Anspruchs 5.

Die Vorrichtung und das Verfahren zum Steuern einer automatischen Lenkung eines Fahrzeugs basieren auf einem Ermitteln einer Differenz zwischen einer geforderten Soll-Fahrtrichtungsgröße und einer von der automatischen (elektronischen) Lenkung eingestellten Ist-Fahrtrichtungsgröße. Der Erfindung liegt auch der Gedanke zugrunde, dass eine Kompensation der Differenz (Offset) innerhalb oder vor der Ausführung einer vorgegebenen Fahrtroute, wie eines Einparkwegs, realisierbar ist, indem vor einem Einstellen der gewünschten Soll-Fahrnichtungsgröße eine korrigierte Soll-Fahrtrichtungsgröße ermittelt wird. Die korrigierte Soll-Fahrtrichtungsgröße wird dabei so gewählt, dass mit hoher Wahrscheinlichkeit ein Fahren des Fahrzeugs in die der gewünschten Soll-Fahrtrichtungsgröße entspre-chende Richtung gewährleistet ist. Dabei wird vorzugsweise ein regelmäßig oder bei Bedarf neu festgelegter Korrekturfaktor verwendet.

Die Vorrichtung und das Verfahren bieten eine Kompensation von Offsets, welche während eines semi-autonomen Einparkmanövers durch die im Fahrzeug verbaute elektronische Lenkung verursacht werden können. Somit kann über die Erfindung die Robustheit von semi-autonomen Einparksystemen verbessert werden. Ein selbständiges Anpassen des Systems an die angeschlossene Sensorik und Aktorik ist dabei möglich. Alterungsprozesse oder andere Einflussfaktoren auf die automatische Lenkung oder auf die Übersetzung des Lenkwinkels in eine Stellung der Räder können somit ausgeglichen werden. Die vorliegende Erfindung lässt sich mit geringen Kosten realisieren

Verschiedene Abweichungen können durch eine erfindungsgemäße Vorrichtung und ein erfindungsgemäßes Verfahren ausgeglichen werden. So können Abweichungen in der internen Signalverarbeitung der elektronischen Lenkung dazu führen, dass eine vorgegebene Soll-Fahrtrichtungsgröße, beispielsweise eine Soll-Fahrtrichtung, ein Soll-Lenkradwinkel und/oder ein Soll-Radwinkel, nur ungenau vom Fahrzeug eingehalten werden. So kann herkömmlicherweise ein Soll-Lenkradwinkel häufig nur ungenau am Lenkrad eingestellt werden. Zusätzlich können Alterungsprozesse oder Abnutzungsprozesse an der automatischen Lenkung oder am Fahrwerk zu einem ungenauen Einstellen der vorgegebenen Soll-Fahrtrichtungsgröße führten. Weitere herkömmliche Fehlerquellen sind Fertigungstoleranzen und äußere Einflüsse oder Änderungen am Fahrwerk. So kann ein mehrmaliges Anfahren eines Bordsteins, wie es in der Regel bei einem längeren Fahren eines Fahrzeugs erfolgt, zu mechanischen Verstellungen am Fahrwerk führten. Auch Änderungen bei der Bereifung des Fahrzeugs können Abweichungen am eingestellten Lenkwinkel gegenüber einem vorgegebenen Soll-Radwinkel bewirken. Die in diesem Absatz genannten herkömmlichen Fehlerursachen können jedoch durch die erfindungsgemäße Vorrichtung und das entsprechende Verfahren ausgeglichen werden.

Die hier verwendete Bezeichnung Korrekturfaktor legt den Korrekturfaktor nicht als Faktor fest. Durch die Korrektur der Soll-Fahrtrichtungsgröße mit dem Korrekturfaktor kann schon vor dem Einstellen einer gewünschten Fahrtrichtung eine ohne die Korrektur wahrscheinliche Abweichung der Fahrtrichtung von der Soll-Fahrtrichtungsgröße verhindert werden. Damit wird schon vor dem Beginn des Fahrabschnitts, beispielsweise des Einparkvorgangs, ein verlässliches Abfahren sichergestellt.

Beispielsweise ist die vorgegebene Soll-Fahrtrichtungsgröße eine Soll-Fahrtrichtung, ein Soll-Lenkradwinkel und/oder ein Soll-Radwinkel, wobei die Ist-Fahrtrichtungsgröße eine Ist-Fahrtrichtung, ein Ist-Lenkradwinkel und/oder ein Ist-Radwinkel ist.
In einer vorteilhaften Weiterbildung ist die Auswerteeinrichtung zusätzlich dazu ausgelegt, über ein Vergleichen des Ist-Lenkradwinkels mit dem Soll-Lenkradwinkel und über ein Vergleichen des Ist-Radwinkels mit dem Soll-Radwinkel die möglichen Ursachen für das Abweichen der mindestens einen Ist-Fahrtrichtungsgröße um die mindestens eine Mindestdifferenz von der mindestens einen vorgegebenen Soll-Fahrtrichtungsgröße einzugrenzen. Entspricht beispielsweise der Ist-Lenkradwinkel dem Soll-Lenkradwinkel, so kann ausgeschlossen werden, dass das Abweichen des Ist-Radwinkels von dem Soll-Radwinkel auf eine Fehlfunktion der automatischen Lenkung zurückzuführen ist. Insbesondere kann über das Vergleichen mehrerer Ist-Werte mit mehreren Soll-Werten die Fehlerursache ermittelt werden. Dies reduziert die Kosten zur Behebung der Abweichung.

In einer weiteren vorteilhaften Weiterbildung weist die Vorrichtung einen weiteren Signaleingang auf, welcher dazu ausgelegt ist, eine von einem weiteren fahrzeugeigenen Sensor ermittelte Fahrzeugneigung und/oder einen von einem weiteren fahrzeugeigenen Sensor ermittelten Reibwert einer befahrenen Straße zu empfangen, wobei die Steuereinrichtung dazu ausgelegt ist, einen der Fahrzeugneigung und/oder dem Reibwert der befahrenen Straße entsprechenden Korrekturfaktor aus einer vorgegebenen Menge von Korrekturfaktoren von der Speichereinrichtung auszulesen. Dies ermöglicht ein Anpassen der korrigierten Soll-Fahrtrichtungsgröße, und damit der entsprechenden Ist-Fahrtrichtungsgröße, an Wetter- und Umgebungsbedingungen.

Die in den oberen Absätzen beschriebenen Vorteile der Vorrichtung gelten auch für das entsprechende Verfahren.

### Kurze Beschreibung der Zeichnungen

Weitere Merkmale und Vorteile der vorliegenden Erfindung werden nachfolgend anhand der Figuren erläutert. Es zeigen:
- Fig. 1: ein Koordinatensystem zum Darstellen eines Beispiels für eine von einem Einparkassistenten ermittelte Lenkwinkelanforderung im zeitlichen Verlauf;
- Fig. 2: ein Koordinatensystem zum Darstellen eines Beispiels für ein ungenaues Einhalten der vorgegebenen Soll-Lenkradwinkel der Fig. 1;
- Fig. 3: ein Flussdiagramm zum Darstellen einer ersten Ausführungsform des Verfahrens zum Steuern einer automatischen Lenkung eines Fahrzeugs;
- Fig. 4: ein Flussdiagramm zum Darstellen einer zweiten Ausführungsform des Verfahrens zum Steuern einer automatischen Lenkung eines Fahrzeugs;
- Fig. 5: eine schematische Darstellung der Vorrichtung zum Steuern einer automatischen Lenkung eines Fahrzeugs;
- Fig. 6: ein Koordinatensystem zum Darstellen einer Weiterbildung der Vorrichtung der Fig. 5;
- Fig. 7: eine schematische Darstellung eines in eine Parklücke einparkenden Fahrzeugs;

### Ausführungsformen der Erfindung

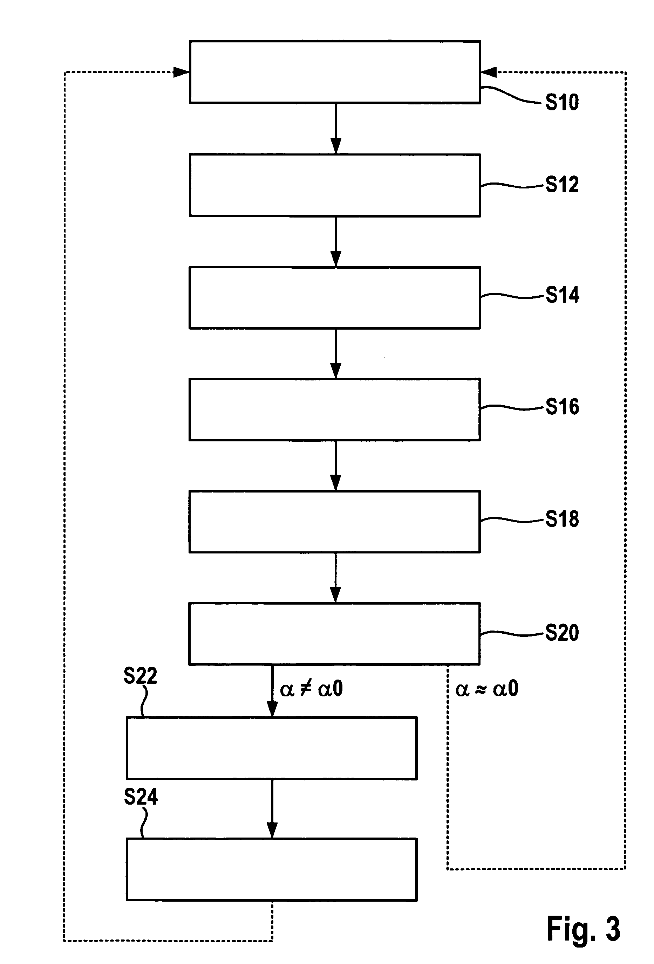

Fig. 3 zeigt ein Flussdiagramm zum Darstellen einer ersten Ausführungsform des Verfahrens zum Steuern einer automatischen Lenkung eines Fahrzeugs.
Zu Beginn des Verfahrens wird eine von einem automatischen Fahrzeugsteuersystem vorgegebenen Soll-Fahrtrichtungsgröße empfangen (Schritt S10). Die Soll-Fahrtrichtungsgröße kann beispielsweise eine Soll-Fahrtrichtung, ein Soll-Lenkradwinkel und/oder ein zu einem bestimmten Zeitpunkt vorteilhaften Radwinkel sein. Anstelle einer einzelnen Größe kann auch eine Folge von Soll-Fahrtrichtungen, beispielsweise ein vorgegebener Einparkweg empfangen werden. Das automatische Fahrzeugsteuersystem kann insbesondere als Einparkassistent und/oder als automatisches Spurhaltesystem ausgebildet sein. Es wird jedoch ausdrücklich darauf hingewiesen, dass das hier beschriebene Verfahren für jedes automatische Fahrzeugsteuersystem, welches zum Bestimmen einer Soll-Fahrtrichtungsgröße während einer Fahrt des Fahrzeugs ausgelegt ist, anwendbar ist. Beispielsweise kann das automatische Fahrzeugsteuersystem auch ein fahrzeugexternes Verkehrssteuersystem sein.

In einem anschließenden Schritt S 12 wird ein hinterlegter Korrekturfaktor abgefragt. Vorzugsweise ist der Korrekturfaktor auf einer fahrzeugeigenen Speichereinrichtung abgespeichert. Beispielsweise speichert der Hersteller vor einer Inbetriebnahme des Fahrzeugs einen Ausgangswert für den Korrekturfaktor auf der Speichereinrichtung ab. Wie im Folgenden beschrieben wird, kann der Korrekturfaktor während der Benutzung des Fahrzeugs fortlaufend korrigiert und an wetterbedingte, umgebungsbedingte und fahrzeugbedingte Situationen angepasst werden.

Anhand des Korrekturfaktors und der vorgegebenen Soll-Fahrtrichtungsgröße wird eine korrigierte Soll-Fahrtrichtungsgröße ermittelt (Schritt S 14). Beispielsweise wird dabei der Korrekturfaktor mit der vorgegebenen Soll-Fahrtrichtungsgröße multipliziert und/oder ein konstanter Zahlenwert des Korrekturfaktors mit der vorgegebenen Soll-Fahrtrichtungsgröße addiert. Die hier verwendete Bezeichnung Korrekturfaktor legt den Korrekturfaktor nicht als Faktor fest.

Die automatische Lenkung wird in einem Schritt S 16 in einen Modus zum Einhalten der korrigierten Soll-Fahrtrichtungsgröße geschaltet. Dabei wird die automatische Lenkung so angesteuert, dass mit einem Einhalten der von dem automatischen Fahrzeugsteuersystem vorgegebenen Soll-Fahrtrichtungsgröße gerechnet werden kann. Die korrigierte Soll-Fahrtrichtungsgröße ist somit die Fahrtrichtungsgröße, bei welcher das Fahrzeug, beispielsweise aufgrund einer Veralterung und/oder einer Beschädigung von einigen seiner Komponenten, nicht in die der korrigierten Soll-Fahrtrichtungsgröße entsprechende Richtung, sondern in eine Richtung entsprechend der von dem automatischen Fahrzeugsteuersystem vorgegebenen Soll-Fahrtrichtungsgröße fährt. Ein genaueres Beispiel zum Verständnis der korrigierten Soll-Fahrtrichtungsgröße wird unten noch beschrieben.

Während des Zeitintervalls, in welchem das Fahrzeug in die vorgegebene Soll-Fahrtrichtungsgröße fahren soll, wird eine Ist-Fahrtrichtungsgröße des Fahrtzeugs ermittelt (Schritt S18). Dies geschieht vorzugsweise über mindestens einen fahrzeugeigenen Sensor. Der mindestens eine fahrzeugeigene Sensor kann ein Lenkradwinkelsensor und/oder ein Radwinkelsensor sein. Vorzugsweise ist der mindestens eine Sensor entsprechend seiner Funktion nahe am Lenkrad und/oder an mindestens einem Rad des Fahrzeugs angeordnet. Die mindestens eine ermittelte Ist-Fahrtrichtungsgröße ist beispielsweise ein am Lenkrad tatsächlich vorliegender Ist-Lenkradwinkel und/oder ein aktuell an einem Rad des Fahrzeugs vorliegender Radwinkel. Ebenso kann der mindestens eine Sensor ein GPS (Global Positioning System) mit einer geeigneten Auflösung zum genauen Ermitteln der aktuellen Ist-Fahrtrichtung des Fahrzeugs sein.

In einem nachfolgenden Schritt S20 wird die mindestens eine ermittelte Ist-Fahrtrichtungsgröße mit der vorgegebenen Soll-Fahrtrichtungsgröße verglichen. Weicht die Ist-Fahrtrichtungsgröße um mindestens eine Mindestdifferenz von der vorgegebenen Soll-Fahrtrichtungsgröße ab (α ≠ α0), so wird in einem weiteren Schritt S22 der Korrekturfaktor entsprechend dem Vergleich neu festgelegt. Beispielsweise ist die Soll-Fahrtrichtungsgröße ein Soll-Lenkradwinkel von 300°. Der als Ist-Fahrtrichtungsgröße ermittelte Ist-Lenkradwinkel liegt jedoch nur bei 295°. In diesem Fall kann über ein Dividieren des Soll-Lenkradwinkels durch den Ist-Lenkradwinkel ein Korrekturfaktor von ungefähr 1,017 berechnet werden.

Der neu festgelegte Korrekturfaktor wird in einem folgenden Schritt S24 abgespeichert. Sobald von dem automatischen Fahrzeugsteuersystem eine weitere Soll-Fahrtrichtungsgröße empfangen wird, kann mittels des neu festgelegten Korrekturfaktors die zugehörige korrigierte Soll-Fahrtrichtungsgröße ermittelt werden. Somit wird die automatische Lenkung schon zu einen vorteilhaft frühen Zeitpunkt in den Modus geschaltet, in welchem nach neuen Erkenntnissen über die aktuelle Wetter- , Umgebungs- und/oder Fahrzeugsituation damit gerechnet werden kann, dass das Fahrzeug in die Richtung fährt, welche der von dem automatischen Fahrzeugsteuersystem vorgegebene Soll-Fahrtrichtungsgröße entspricht.

Die von dem automatischen Fahrzeugsteuersystem empfangene Soll-Fahrtrichtungsgröße ist beispielsweise ein Soll-Lenkradwinkel von 150°. Für eine vorausgehende Kompensierung einer wahrscheinlichen Abweichung zwischen dem Soll-Lenkradwinkel und einem Ist-Lenkradwinkel beim Schalten der automatischen Lenkung in einen Modus zum Einhalten des vorgegebenen Soll-Lenkradwinkels von 150° kann ein korrigierter Soll-Lenkradwinkel berechnet werden. Dazu kann der vorgegebene Soll-Lenkradwinkel mit dem neu festgelegten Korrekturfaktor von ungefähr 1,017 multipliziert werden. Beispielsweise wird dabei ein korrigierter Soll-Lenkradwinkel von 152° berechnet. Die automatische Lenkung wird anschließend in einen Modus zum Einhalten des korrigierten Soll-Lenkradwinkels von 152° geschaltet. Da sich das Ermitteln des korrigierten Soll-Lenkradwinkels relativ schnell ausführen lässt, ist die dadurch möglicherweise bedingte Verzögerung beim Ansteuern der automatischen Lenkung vernachlässigbar. Die automatischen Lenkung wird somit nach einem Empfang des vorgegebenen Soll-Lenkradwinkels von 150° direkt so angesteuert, dass der Ist-Lenkradwinkel tatsächlich 150° beträgt.

Wird in Schritt S20 festgestellt, dass die Ist-Fahrtrichtungsgröße der vorgegebenen Soll-Fahrtrichtungsgröße entspricht (α ≈ α0), so kann auf ein Neubestimmen des Korrekturfaktors verzichtet werden. Selbstverständlich kann jedoch auch in diesem Fall ein Wert für den Korrekturfaktor berechnet werden, welcher jedoch dem bisher verwendeten Wert für den Korrekturfaktor in etwa entspricht. Unter dem Vergleich der ermittelten Ist-Fahrtrichtungsgröße mit der vorgegebenen Soll-Fahrtrichtungsgröße und/oder mit der korrigierten Soll-Fahrtrichtungsgröße in Schritt 20 kann somit auch ein Rechenschritt verstanden werden, mit welchem fortlaufend ein aktueller Wert für den Korrekturfaktor bestimmt wird. Ein neues Festlegen des Korrekturfaktors erfolgte jedoch bei einer Ist-Fahrtrichtungsgröße entsprechend der vorgegebenen Soll-Fahrtrichtungsgröße nicht, da der aktuelle bestimmte Wert des Korrekturfaktors dem vorhergehenden Wert des Korrekturfaktors entspricht.

Das hier beschriebene Verfahren ermöglicht ein fortlaufendes Anpassen der im Verbund mit der Lenkradmechanik wirkenden Komponenten an den aktuellen Zustand der einzelnen Komponenten. Die im Verbund mit der Lenkradmechanik wirkenden Komponenten können beispielsweise eine elektrische Lenkung (Electronic Steering Chassis, ESC), ein Fahrwerk und/oder die Reifen des Fahrzeugs umfassen. Es wird hier ausdrücklich darauf hingewiesen, dass das hier beschriebene Verfahren nicht nur eine Veralterung und/oder Beschädigung der elektrischen Lenkung, sondern auch eine Fehlfunktion des Fahrwerks, ein abweichendes Verhalten beim Übersetzen des Lenkradwinkels in einen Radwinkel und/oder unterschiedliche Eigenschaften von Reifen kompensieren kann. Dies verbessert die Systemrobustheit der im Verbund mit der Lenkradmechanik wirkenden Komponenten erheblich. Der Korrekturfaktor kann dabei über ein fortlaufendes Neubestimmen (Tracken) stets aktualisiert werden. Ein massiver Applikationsaufwand ist dabei nicht nötig.

In einer Weiterbildung können auch mehrere Ist-Fahrtrichtungsgrößen mit der vorgegebenen Soll-Fahrtrichtungsgröße verglichen werden. Beispielsweise werden ein Ist-Lenkwinkel mit einem Soll-Lenkwinkel und ein Ist-Radwinkel mit einem Soll-Radwinkel verglichen. Der Soll-Lenkwinkel und der Soll-Radwinkel können von dem automatischen Fahrzeugsteuersystem bereitgestellt werden und/oder aus einer vorgegebenen Soll-Fahrtrichtungsgröße ermittelt werden. Durch den Vergleich mehrerer Ist-Werte mit mehreren Soll-Werten können die möglichen Ursachen für das Abweichen der mindestens einen Ist-Fahrtrichtungsgröße um die mindestens eine Mindestdifferenz von der mindestens einen vorgegebenen Soll-Fahrtrichtungsgröße eingegrenzt werden. Insbesondere kann festgestellt werden, aufgrund welcher funktionsbeeinträchtigten Komponente eine vorgegebene Soll-Fahrtrichtungsgröße vom Fahrzeug nicht eingehalten wird. Eine entsprechende Nachricht kann anschließend dem Fahrer mitgeteilt werden. Somit ermöglicht die Erfindung eine schnellere und kostengünstigere Behebung von Fehlfunktionen der im Verbund mit der Lenkradmechanik wirkenden Komponenten.

In einer weiteren bevorzugten Weiterbildung des Verfahrens kann der Vergleichswert in Abhängigkeit von einer Fahrzeugneigung(Straßenneigung) und/oder einem Reibwert der befahrenen Straße ermittelt werden. Herkömmlicherweise sind viele Fahrzeuge mit mindestens einem Sensor ausgestatten, mit welchem sich die Straßenneigung, die Fahrzeugneigung und/oder der Reibwert der befahrenen Straße bereits ermitteln lässt. Beispielsweise kann der Reibwert der befahrenen Straße mittels eines im ESP- oder ACC-System eingesetzten Sensors bestimmt werden.

Somit kann die Fahrzeugneigung(Straßenneigung) und/oder der Reibwert der befahrenen Straße vor einem Ermitteln der korrigierten Soll-Fahilrichtungsgröße abgefragt werden. Anschließend wird der Korrekturfaktor aus einer Menge von mehreren Korrekturfaktoren von einer Speichereinrichtung ausgelesen, welcher der Straßenneigung, der Fahrzeugneigung und/oder dem Reibwert der befahrenen Straße am besten entspricht. Die auf diese Weise bestimmte korrigierte Soll-Fahrtrichtungsgröße ist somit besonders gut an die aktuellen Wetter- und/oder Umweltbedingen angepasst. Des Weiteren kann ein neubestimmter Korrekturfaktor zusammen mit mindestens einem aktuell ermittelten Wert für die Fahrzeugneigung(Straßenneigung) und/oder den Reibwert der befahrenen Straße abgespeichert werden.

Die hier beschriebene Weiterbildung des Verfahrens ermöglicht somit ein Lernen über eine optimale Richtungssteuerung des Fahrzeugs hinsichtlich dem Alterungs- und Funktionszustand des Fahrzeugs, den Wetter- und/oder den Umgebungsbedingungen. Somit können Abweichungen, welche sich beim Fahrtrichtungswechsel auf einer vereisten Straße sonst ergeben können, über das Lernen reduziert oder kompensiert werden.

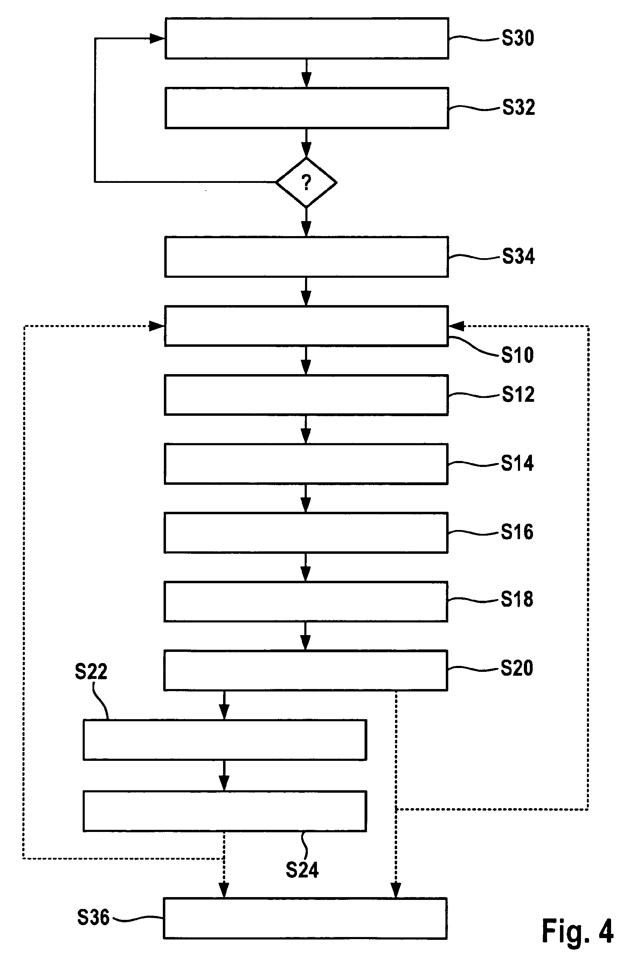

Fig. 4 zeigt ein Flussdiagramm zum Darstellen einer zweiten Ausführungsform des Verfahrens zum Steuern einer automatischen Lenkung eines Fahrzeugs.

Während eines ersten Schritts S30 des Verfahrens wird eine Parklückenlokalisierung ausgeführt. Bei der Parklückenlokalisierung ist ein Einparkassistent des Fahrzeugs, beispielsweise ein semi-autonomer Einparkassistent (PSC) in einem Modus aktiviert, in welchem der Einparkassistent während der Fahrt des Fahrzeugs nach einer Parklücke sucht. Da Verfahren zum Ermitteln einer Parklücke, beispielsweise über einen im Stoßfänger integrierten Ultraschallsensor, aus dem Stand der Technik bekannt sind, wird hier nicht genauer darauf eingegangen. Während der Vorbeifahrt an einer potentiellen Parklücke vermisst der Sensor des Einparkassistenten die Parklücke und ermittelt die Lage des Fahrzeugs zu der Parklücke.
Entspricht die Parklücke den gewünschten Anforderungen, so erhält der Fahrer über eine Ausgabeeinrichtung, beispielsweise über ein Display, eine Meldung über die gefundene Parklücke (Schritt S32).

Der Fahrer hat nun die Möglichkeit, über eine entsprechende Eingabe der gefundenen Parklücke zuzustimmen. Tut er es nicht, so werden die Schritte S30 und S32 wiederholt.

Gibt der Fahrer seine Zustimmung zu der gefundenen Parklücke, so berechnet der Einparkassistent in einem weiteren Schritt S34 einen vorteilhaften Einparkweg. Das Ermitteln des vorteilhaften Einparkwegs kann wie oben bereits beschrieben ausgeführt werden. Anschließend werden die Daten des ermittelten Einparkwegs, insbesondere die mindestens eine Soll-Fahrtrichtungsgröße, ausgegeben.

Das anhand der Fig. 3 beschriebene Verfahren kann nun ausgeführt werden. In Schritt S10 wird ein Soll-Lenkradwinkel als die mindestens eine Soll-Fahrtrichtungsgröße empfangen. Mittels des in Schritt S 12 abgelesenen Korrekturfaktors wird danach mindestens ein korrigierter Soll-Lenkradwinkel als korrigierte Soll-Fahrtrichtungsgröße berechnet (Schritt S14).

Der korrigierte Soll-Lenkwinkel kann in einem Schritt S 16 als Lenkwinkelanforderung an eine automatische Lenkung ausgegeben werden. In diesem Fall ist die automatische Lenkung so ausgelegt, dass sie nach einem Empfangen der korrigierten Soll-Fahrtrichtungsgröße das Lenkrad des Fahrzeugs so verstellt, dass die mindestens eine vorgegebene Soll-Fahrtrichtungsgröße während der vorgegebenen Zeitintervalle möglichst genau eingehalten wird.

Sobald sich der stabile (konstante) Zustand der Lenkwinkelanforderung eingestellt hat, kann der reale Ist-Lenkradwinkel ermittelt werden (Schritt S18). Der Ist-Lenkradwinkel ist beispielsweise über den Fahrzeugbus (CAN) erfragbar. Der reale Offset des Ist-Lenkradwinkels von dem vorgegebenen Soll-Lenkradwinkel und/oder dem korrigierten Soll-Lenkradwinkel lässt sich nun mittels eines Vergleichs und/oder einer Differenz der mindestens zwei Größen ermitteln (Schritt 20). In einer Weiterbildung des Verfahrens kann der durch die Lenkradmechanik bedingte Offset für verschiedene geforderte Lenkradwinkelanforderungen (Soll-Lenkradwinkel) getrackt werden.

Wird in Schritt S20 festgestellt, dass der Ist-Lenkradwinkels von dem vorgegebenen Soll-Lenkradwinkel und/oder dem korrigierten Soll-Lenkradwinkel signifikant abweicht, so wird der Korrekturfaktor neu festgelegt (Schritt S22) und für eine folgende Korrektur des von dem Einparkassistenten vorgegebenen Soll-Lenkradwinkels abgespeichert (Schritt S24). Da die Schritte S22 und S24 oben ausführlich beschrieben sind, wird hier nicht weiter auf sie eingegangen.

Die Schritte S 10 bis S20 werden so oft wiederholt, bis das Fahrzeug in der Parklücke ist. Danach wird das Verfahren mit einer Deaktivierung des Einparkassistenten beenden (Schritt S36).

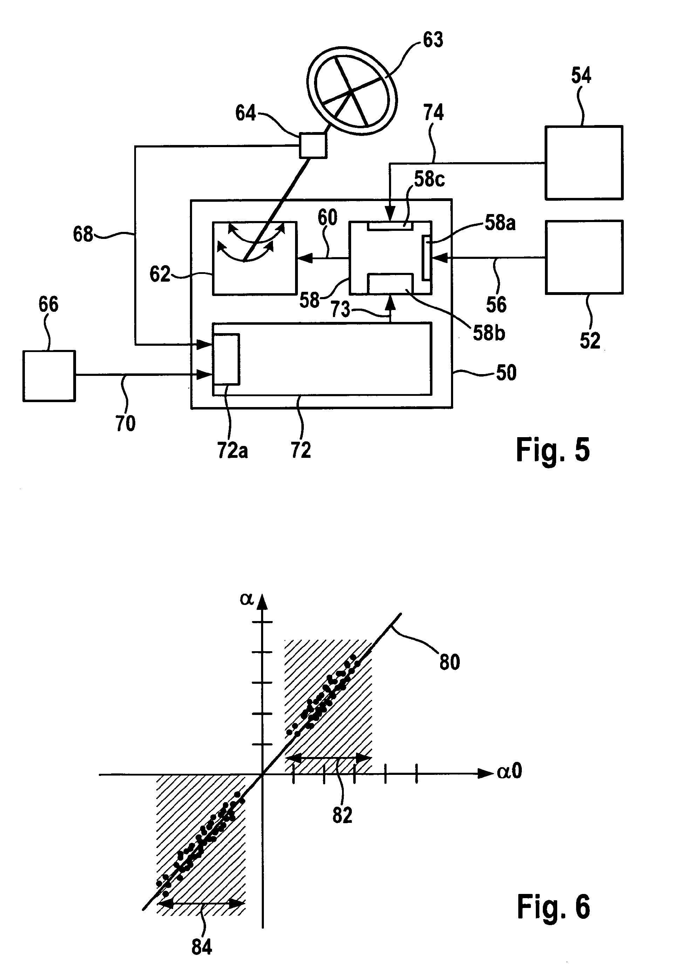

Fig. 5 zeigt eine schematische Darstellung der Vorrichtung zum Steuern einer automatischen Lenkung eines Fahrzeugs.

Ein (nicht dargestelltes) Fahrzeug mit der Vorrichtung 50 zum Steuern einer automatischen Lenkung des Fahrzeugs ist zusätzlich mit mindestens einem automatischen Fahrzeugsteuersystem 52 und 54 ausgestattet. Beispielsweise weist das Fahrzeug ein erstes automatisches Fahrzeugsteuersystem 52 auf, welches als Einparkassistent dazu ausgelegt ist, eine Information über einen vorteilhaften Einparkweg an die Vorrichtung 50 bereitzustellen. Das erste automatische Fahrzeugsteuersystem 52 gibt dabei mit einem Ausgabesignal 56 mindestens eine Soll-Fahrtrichtungsgröße der Vorrichtung 50 vor. Die mindestens eine Soll-Fahrtrichtungsgröße des Ausgabesignals 56 ist beispielsweise eine Soll-Fahrtrichtung, ein Soll-Lenkradwinkel und/oder ein Soll-Radwinkel.

Die Vorrichtung 50 weist einen ersten Signaleingang 58a zum Empfangen der vorgegebenen Soll-Fahrtrichtungsgröße auf. Beispielsweise ist der erste Signaleingang 58a eine Untereinheit einer Steuereinrichtung 58 der Vorrichtung 50. Die Steuereinrichtung 58 ist beispielsweise dazu ausgelegt, mittels eines Steuersignals 60 eine automatische Lenkung 62 des Fahrzeugs so zu steuern, dass der Fahrer während einer Fahrt des Fahrzeugs kaum noch eine Betätigung des Lenkrads 63 ausführen muss. Vorzugsweise übernimmt die Steuereinrichtung 58 die Steuerung der aktuellen Fahrtrichtung des Fahrzeugs vollständig. Ein Lenkradeingriff von Seiten des Fahrers ist in diesem Fall nicht notwendig.

Die automatische Lenkung 62 kann als elektrische Lenkung des Fahrzeugs ausgebildet sein. Die automatische Lenkung 62 kann eine Untereinheit der Vorrichtung 50 sein. Ebenso ist es möglich, dass die Vorrichtung 50 getrennt von der automatischen Lenkung 62 am Fahrzeug angeordnet ist und das Steuersignal 60 über den Fahrzeugbus an die automatische Lenkung 62 weitergeleitet wird.

Die automatische Lenkung 62 kann jedoch auch so ausgebildet sein, dass sie die Betätigung des Lenkrads 63 durch den Fahrer lediglich unterstützt. Beispielsweise übt die automatische Lenkung 62 eine Kraft auf das Lenkrad 63 aus, welche eine vorteilhafte Betätigung des Lenkrads 63 durch den Fahrer erleichtert. Die von der automatischen Lenkung 62 auf das Lenkrad 63 ausgeübte Kraft wirkt beispielsweise in die Drehrichtung, in welche der Fahrer das Lenkrad 63 drehen soll. Dreht der Fahrer das Lenkrad 63 hingegen entgegen der vorteilhaften Drehrichtung, so wird er aufgrund der vergleichsweise großen Kraft, mit welcher er der automatischen Lenkung 62 entgegenwirken muss, auf seine unvorteilhafte Lenkradbetätigung aufmerksam gemacht.

Die Steuereinrichtung 58 ist an eine Speichereinrichtung 58b gekoppelt, auf welcher mindestens ein Korrekturfaktor ablesbar abgespeichert ist. Die Speichereinrichtung 58b kann als Untereinheit der Steuereinrichtung 58 oder als eine getrennt von der Steuereinrichtung 58 angeordnete Einheit ausgebildet sein. Auf das Ablesen eines geeigneten Korrekturfaktors wird unten noch genauer eingegangen.

Die Steuereinrichtung 58 ist dazu ausgelegt, nach einem Empfang einer Soll-Fahrtrichtungsgröße eine korrigierte Soll-Fahrtrichtungsgröße anhand des Korrekturfaktors und der vorgegebenen Soll-Fahrtrichtungsgröße zu ermitteln und die automatische Lenkung 62 mittels des Steuersignals 60 in einen Modus zum Einhalten der korrigierten Soll-Fahrtrichtungsgröße zu schalten. Unter dem Schalten der automatischen Lenkung 62 kann auch ein Ansteuern verstanden werden. Da der Zweck der korrigierten Soll-Fahrtrichtungsgröße oben schon ausführlich beschrieben ist, wird hier nicht noch einmal darauf eingegangen.

Die automatische Lenkung 62 verstellt nach einem Empfang des Steuersignals 60 das Lenkrad 63. Das Verstellen des Lenkrads 63 durch die automatische Lenkung 62 ist über mindestens einen fahrzeugeigenen Sensor 64 und 66 erfassbar. Der Sensor 64 ist beispielsweise als Lenkradwinkelsensor dazu ausgelegt, die aktuelle Stellung des Lenkrads 63 zu ermitteln. Ein erstes Sensorsignal 68 mit einem von dem Sensor 64 ermittelten Ist-Lenkradwinkel wird anschließend an die Vorrichtung 50 bereitgestellt.

Das Verstellen des Lenkrads 63 durch die Lenkradmechanik 62 bewirkt eine Änderung der aktuellen Stellung der Räder. Die Stellung mindestens eines (nicht skizzierten) Rades kann über den als Radwinkelsensor ausgebildeten Sensor 66 ermittelt und über ein zweites Sensorsignal 70 mit einem Ist-Radwinkel an die Vorrichtung 50 bereitgestellt werden.

Die Vorrichtung 50 weist einen zweiten Signaleingang 72a zum Empfangen der von den Sensoren 64 und 66 ausgegebenen Sensorsignale 68 und 70 auf. Der zweite Signaleingang 72a ist an eine Auswerteeinrichtung 72 zum Auswerten des Ist-Lenkradwinkels und/oder des Ist-Radwinkels angekoppelt.

Die Auswerteeinrichtung 72 ist dazu ausgelegt, die mindestens eine von einem Sensor 64 und 66 des Fahrzeugs ermittelte Ist-Fahrtrichtungsgröße mit der mindestens einen vorgegebenen Soll-Fahrtrichtungsgröße zu vergleichen. Bei dem dargestellten Beispiel vergleicht die Auswerteeinrichtung 72 den Ist-Lenkradwinkel mit dem bereitgestellten Soll-Lenkradwinkel und den Ist-Radwinkel mit dem bereitgestellten Soll-Radwinkel. Das Signal zum Bereitstellen des Soll-Lenkradwinkels und des Soll-Radwinkels an die Auswerteeinrichtung 72 ist der besseren Übersichtlichkeit wegen nicht in Fig. 5 eingezeichnet.

Unter einem Vergleich der mindestens einen Ist-Fahrtrichtungsgröße mit der mindestens einen vorgegebenen Soll-Fahrtrichtungsgröße kann auch das Berechnen eines den Vergleich wiedergebenden Zahlenwerts verstanden werden. Beispiele zum Berechnen dieses Zahlenwerts sind oben schon gegeben. Ein weiteres Beispiel für eine vorteilhafte Ermittlung des Zahlenwerts wird bei der Beschreibung der Fig. 6 erläutert.

Somit ist die Auswerteeinrichtung 72 in einer Situation, in welcher die Ist-Fahrtrichtungsgröße um mindestens eine Mindestdifferenz von der vorgegebenen Soll-Fahrtrichtungsgröße abweicht, dazu ausgelegt, einen die Abweichung wiedergebenden Zahlenwert zu berechenen. Selbstverständlich kann in einer besonderen Ausführungsform der Vorrichtung 50 dieser Zahlenwert nur nach einem Feststellen eines Überschreitens der Mindestdifferenz zwischen der Ist-Fahrtrichtungsgröße und der vorgegebenen Soll-Fahrtrichtungsgröße berechnet werden. Ein dem berechneten Zahlenwert entsprechender Korrekturfaktor wird anschließend neu festgelegt und mittels eines Speichersignals 73 an die Speichereinrichtung 58 ausgegeben. Der Korrekturfaktor wird auf der Speichereinrichtung 58b abgespeichert.

Bei einem späteren Ermitteln einer korrigierten Soll-Fahrtrichtungsgröße kann der neu festgelegte Korrekturfaktor herangezogen werden. Somit ist es möglich, Abweichungen der automatischen Lenkung 62 beim Verstellen des Lenkrads 63, welche sich beispielsweise aufgrund einer Alterung der automatischen Lenkung 62 oder anderer Lenkrad-Komponenten ergeben, entgegenzuwirken. Dies gewährleistet eine vorbeugende Korrektur beim automatischen Verstellen des Lenkrads 63. Zusätzlich ist es möglich, durch das Vergleichen des Ist-Radwinkels mit dem Soll-Radwinkel eine fehlerbehaftete Übersetzung des Ist-Lenkradwinkels in den Ist-Radwinkel zu kompensieren. Dies gewährleistet zusätzlich ein Entgegenwirken von Alterungsprozessen und/oder mechanischen Verstellungen am Fahrwerk.

In einer bevorzugten Ausfiihrungsform ist die Steuereinrichtung 58 an einen dritten Signaleingang 58c zum Empfangen eines Datensignals 74 mit einer aktuellen Fahrzeugneigung (Straßenneigung) und/oder einen Reibwert einer gerade befahrenen Straße gekoppelt. Das Datensignal 74 mit der aktuellen Fahrzeugneigung und/oder dem Reibwert der gerade befahrenen Straße wird beispielsweise von dem zweiten automatischen Fahrzeugsteuersystem 54 bereitgestellt. Ein derartiges zweites automatisches Fahrzeugsteuersystem 54, welches dazu ausgelegt ist, die aktuelle Fahrzeugneigung und/oder den Reibwert der gerade befahrenen Straße zu ermitteln, ist beispielsweise ein ESP- oder ein ACC-System. Selbstverständlich kann das zweite automatische Fahrzeugsteuersystem 54 auch einstückig mit dem ersten automatischen Fahrzeugsteuersystem 52 ausgebildet sein.

Die Steuereinrichtung 58 oder die Auswerteeinrichtung 72 kann so ausgelegt sein, dass sie einen von der Auswerteeinrichtung 72 ermittelten Korrekturwert zusammen mit dem zugehörigen Wert für die Fahrzeugneigung und/oder für den Reibwert der gerade befahrenen Straße auf der Speichereinrichtung 58b abspeichert. Zu einem späteren Zeitpunkt wird beim Ermitteln der korrigierten Soll-Fahrtrichtungsgröße anhand eines empfangenen Datensignals 74 der Korrekturfaktor von der Speichereinrichtung 58b abgefragt, welcher bei einem entsprechenden Wert für die Fahrzeugneigung und/oder für den Reibwert der gerade befahrenen Straße (neu) festgelegt ist.

In den oberen Absätzen ist die beschriebene Vorrichtung 50 dazu ausgelegt ist, Signale von einem Einparkassistenten zu empfangen und zum Verstellen des Lenkrads 63 auszuwerten. Selbstverständlich ist die vorliegende Erfindung nicht auf dieses Anwendungsbeispiel beschränkt. Die Vorrichtung 50 kann auch dazu ausgelegt sein, in einem anderen selbstfahrenden Modus des Fahrzeugs das Lenkrad 63 entsprechend den Vorgaben eines anderen automatischen Fahrzeugsteuersystems 52, beispielsweise eines automatischen Spurhaltesystems, zu betätigen.

Fig. 6 zeigt ein Koordinatensystem zum Darstellen einer Weiterbildung der Vorrichtung der Fig. 5. Die Abszisse des Koordinatensystems gibt die Soll-Lenkradwinkel α0 an, welche bei einem oder mehreren Einparkvorgängen von einem als Einparkassistent fungierenden automatischen Fahrzeugsteuersystem vorgegeben werden. Die Abszisse des Koordinatensystems entspricht den zu den vorgegebenen Soll-Lenkradwinkeln α0 ermittelten Ist-Lenkradwinkeln α. Beispielsweise werden die Ist-Lenkradwinkel α von einem Lenkradwinkelsensor an den Fahrzeugbus ausgegeben und von einer Auswerteeinrichtung aus dem Fahrzeugbus abgelesen.

Die in das Koordinatensystem eingetragenen Punkte entsprechen den Wertepaaren aus Soll-Lenkradwinkeln α0 und Ist-Lenkradwinkeln α. Sie beziehen sich auf unterschiedliche parametrierte Lenkradwinkelbereiche 82 und 84. Beispielsweise kann bei den Lenkradwinkelbereichen 82 und 84 zwischen einer Vorwärtsfahrt und einer Rückwärtsfahrt des Fahrzeugs unterschieden werden.

Anhand der in das Koordinatensystem eingetragenen Punkte lässt sich eine Regressionsgerade 80 oder Ausgleichsgerade ermitteln. Die Steigung der Regressionsgerade 80 kann von der Auswerteeinrichtung ermittelt und anschließend als Korrekturfaktor auf der Speichereinrichtung abgespeichert werden.

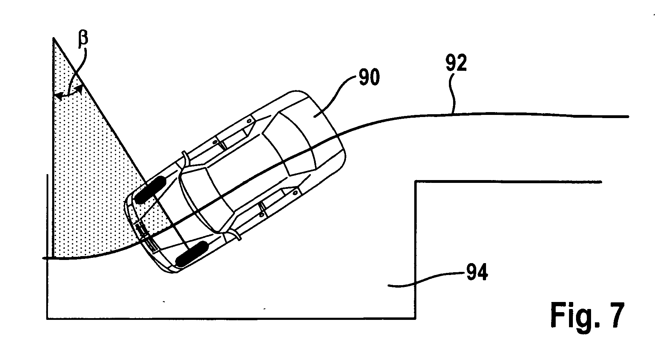

Fig. 7 zeigt eine schematische Darstellung eines in eine Parklücke einparkenden Fahrzeugs.

Das schematisch wiedergegebene Fahrzeug 90 wird über ein automatisches Abfahren einer von einem nicht dargestellten Einparkassistenten ermittelten Einparktrajektorie 92 in eine Parklücke 94 gelotst. Vorzugsweise erfolgt das automatische Abfahren der Einparktrajektorie 92 mittels einer automatischen Lenkradregelung, wie beispielsweise eine elektrische Lenkung. Zu jedem Zeitpunkt des Einparkvorgangs kann die Position des Fahrzeugs 90 relativ zur Parklücke 94 über ein odometrisches Verfahren, beispielsweise unter Verwendung eines Lenkradwinkelsensors oder eines Radimpulszählers, ermittelt werden.

Für ein genaues Abfahren der vorgegebenen Einparktrajektorie 92 ist es wichtig, dass der ausführbare maximale Lenkradwinkel und/oder der ausführbare maximale Radwinkel des Fahrzeugs 90 größer oder gleich dem größten Lenkradwinkel β und/oder dem größten Radwinkel der Einparktrajektorie 92 sind. Dabei kann die Einparktrajektorie 92, insbesondere bei einem Einparkweg in eine enge Parklücke 94 vergleichsweise große Lenkradwinkel (Volleinschlag) und/oder Radwinkel aufweisen.

## Patentansprüche

1. Vorrichtung (50) zum Steuern einer automatischen Lenkung (62) eines Fahrzeugs (90) mit
einem Signaleingang (58a), welcher dazu ausgelegt ist, eine von einem automatischen Fahrzeugsteuersystem (52,54) vorgegebene Soll-Fahrtrichtungsgröße (α0) zu empfangen;
einer Speichereinrichtung (58b), auf welcher ein Korrekturfaktor ablesbar abgespeichert ist;
einer Steuereinrichtung (58), welche dazu ausgelegt ist, eine korrigierte Soll-Fahrtrichtungsgröße anhand des Korrekturfaktors und der vorgegebenen Soll-Fahrtrichtungsgröße (α0) zu ermitteln und die automatische Lenkung (62) in einen Modus zum Einhalten der korrigierten Soll-Fahrtrichtungsgröße zu schalten;
einer Auswerteeinrichtung (72), welche dazu ausgelegt ist, eine von einem Sensor (64,66) des Fahrzeugs (90) ermittelte Ist-Fahrtrichtungsgröße (α) zu empfangen und mit der vorgegebenen Soll-Fahrtrichtungsgröße (α0) zu vergleichen, und, sofern die Ist-Fahrtrichtungsgröße (α) um mindestens eine Mindestdifferenz von der vorgegebenen Soll-Fahrtrichtungsgröße (α0) abweicht, den Korrekturfaktor entsprechend dem Vergleich neu festzulegen und auf der Speichereinrichtung (58b) abzuspeichern.

2. Vorrichtung (50) nach Anspruch 1, wobei die vorgegebenen Soll-Fahrtrichtungsgröße (α0) eine Soll-Fahrtrichtung, ein Soll-Lenkradwinkel (α0) und/oder ein Soll-Radwinkel ist, und wobei die Ist-Fahrtrichtungsgröße (α) eine Ist-Fahrtrichtung, ein Ist-Lenkradwinkel (α) und/oder ein Ist-Radwinkel ist.

3. Vorrichtung (50) nach Anspruch 2, wobei die Auswerteeinrichtung (72) zusätzlich dazu ausgelegt ist, über ein Vergleichen des Ist-Lenkradwinkels (α) mit dem Soll-Lenkradwinkel (α0) und über ein Vergleichen des Ist-Radwinkels mit dem Soll-Radwinkel die möglichen Ursachen für das Abweichen der mindestens einen Ist-Fahrtrichtungsgröße (α) um die mindestens eine Mindestdifferenz von der mindestens einen vorgegebenen Soll-Fahrtrichtungsgröße (α0) einzugrenzen.

4. Vorrichtung (50) nach einem der vorhergehenden Ansprüche mit einem weiteren Signaleingang (58c), welcher dazu ausgelegt ist, eine von einem weiteren fahrzeugeigenen Sensor ermittelte Fahrzeugneigung und/oder einen von dem weiteren fahrzeugeigenen Sensor ermittelten Reibwert einer befahrenen Straße zu empfangen, wobei die Steuereinrichtung (58) dazu ausgelegt ist, einen der Fahrzeugneigung und/oder dem Reibwert der befahrenen Straße entsprechenden Korrekturfaktor aus einer vorgegebenen Menge von Korrekturfaktoren von der Speichereinrichtung (58b) auszulesen.

5. Verfahren zum Steuern einer automatischen Lenkung (62) eines Fahrzeugs (90) mit den Schritten:
a) Empfangen einer von einem automatischen Fahrzeugsteuersystem (52,54) vorgegebenen Soll-Fahrtrichtungsgröße (α0) (S 10);
b) Ablesen eines hinterlegten Korrekturfaktors (S 12);
c) Ermitteln einer korrigierten Soll-Fahrtrichtungsgröße anhand des Korrekturfaktors und der vorgegebenen Soll-Fahrtrichtungsgröße(α0) (S14);
d) Schalten der automatischen Lenkung (62) in einen Modus zum Einhalten der korrigierten Soll-Fahrtrichtungsgröße (S 16);
e) Ermitteln einer Ist-Fahrtrichtungsgröße (α) des Fahrzeugs (90) (S18);
f) Vergleichen der Ist-Fahrtrichtungsgröße (α) mit der vorgegebenen Soll-Fahrtrichtungsgröße(α0) (S20);
g) sofern die Ist-Fahrtrichtungsgröße (α) um mindestens eine Mindestdifferenz von der vorgegebenen Soll-Fahrtrichtungsgröße (α0) abweicht, neues Festlegen des Korrekturfaktors entsprechend dem Vergleich (S22); und
h) Hinterlegen des Korrekturfaktors für ein mindestens einmaliges Widerholen zumindest der Schritte a) bis d)(S24).

## Claims

1. Device (50) for controlling an automatic steering system (62) of a vehicle (90), having
a signal input (58a) which is configured to receive a setpoint travel-direction variable (α0) which is predefined by an automatic vehicle control system (52, 54);
a memory device (58b) on which a correction factor is stored in a readable fashion;
a control device (58) which is configured to determine a corrected setpoint travel-direction variable on the basis of the correction factor and the predefined setpoint travel-direction variable (α0) and to switch the automatic steering system (62) into a mode for complying with the corrected setpoint travel-direction variable;
an evaluation device (72) which is configured to receive an actual travel-direction variable (α) determined by a sensor (64, 66) of the vehicle (90), and to compare it with the predefined setpoint travel-direction variable (α0) and, if the actual travel-direction variable (α) deviates from the predefined setpoint travel-direction variable (α0) by at least a minimum difference, to re-define the correction factor in accordance with the comparison and to store it on the memory device (58b).

2. Device (50) according to Claim 1, wherein the predefined setpoint travel-direction variable (α0) is a setpoint travel direction, a setpoint steering wheel angle (α0) and/or a setpoint wheel angle, and wherein the actual travel-direction variable (α) is an actual travel direction, an actual steering wheel angle (α) and/or an actual wheel angle.

3. Device (50) according to Claim 2, wherein the evaluation device (72) is additionally configured to limit the possible causes for the deviation of the at least one actual travel-direction variable (α) from the at least one predefined setpoint travel-direction variable (α0) by the at least one minimum difference by comparing the actual steering wheel angle (α) with the setpoint steering wheel angle (α0) and by comparing the actual wheel angle with the setpoint wheel angle.

4. Device (50) according to one of the preceding claims, having a further signal input (58c) which is configured to receive a vehicle inclination, determined by a further vehicle-mounted sensor, and/or a coefficient of friction of a road being travelled on, which is determined by the further vehicle-mounted sensor, wherein the control device (58) is configured to read out a correction factor, corresponding to the vehicle inclination and/or the coefficient of friction of the road being travelled on, from a predefined set of correction factors from the memory device (58b).

5. Method for controlling an automatic steering system (62) of a vehicle (90), having the steps:
a) reception of a setpoint travel-direction variable (α0) (S10) predefined by an automatic vehicle control system (52, 54);
b) reading out of a stored correction factor (S12);
c) determination of a corrected setpoint travel-direction variable on the basis of the correction factor and the predefined setpoint travel-direction variable (α0) (S14);
d) switching of the automatic steering system (62) into a mode for complying with the corrected setpoint travel-direction variable (S16);
e) determination of an actual travel-direction variable (α) of the vehicle (90) (S18);
f) comparison of the actual travel-direction variable (α) with the predefined setpoint travel-direction variable (α0) (S20);
g) re-definition of the correction factor in accordance with the comparison (S22) if the actual travel-direction variable (α) deviates from the predefined setpoint travel-direction variable (α0) by at least a minimum difference; and
h) storage of the correction factor for at least single repetition of at least the steps a) to d) (S24).

## Revendications

1. Dispositif (50) de commande d'une direction automatique (62) d'un véhicule (90), le dispositif présentant :
une entrée de signaux (58a) conçue pour recevoir une grandeur (α0) de consigne de direction de roulage prédéterminée par un système automatique (52, 54) de commande du véhicule,
un dispositif (58b) à mémoire dans lequel un facteur de correction peut être conservé et lu,
un dispositif de commande (58) conçu pour déterminer une grandeur de consigne de direction de roulage corrigée à l'aide du facteur de correction et de la grandeur prédéterminée (α0) de consigne de direction de roulage et pour brancher la direction automatique (62) en un mode de maintien de la grandeur de consigne de direction de roulage corrigée,
une unité d'évaluation (72) conçue pour recevoir une grandeur effective (α) de direction de roulage déterminée par un détecteur (64, 66) du véhicule (90), pour la comparer à la grandeur prédéterminée (α0) de consigne de direction de roulage pour autant que la grandeur effective (α) de direction de roulage s'écarte d'au moins une différence minimale de la grandeur prédéterminée (α0) de consigne de direction de roulage, pour définir à nouveau le facteur de correction en fonction de la comparaison et pour le conserver dans le dispositif (58b) à mémoire.

2. Dispositif (50) selon la revendication 1, dans lequel la grandeur prédéterminée (α0) de consigne de direction de roulage est une direction de consigne, un angle de consigne (α0) du volant et/ou un angle de consigne des roues, la grandeur effective (α) de direction de roulage étant une grandeur effective de roulage, un angle effectif (α) de volant et/ou un angle effectif des roues.

3. Dispositif (50) selon la revendication 2, dans lequel l'unité d'évaluation (72) est de plus conçue pour, par l'intermédiaire d'une comparaison entre l'angle effectif (α) de volant et l'angle (α0) de consigne de volant et par l'intermédiaire d'une comparaison entre l'angle effectif des roues et l'angle de consigne des roues, limiter les causes possibles de l'écart entre la ou les grandeurs effectives (α) de direction de roulage et limiter la ou les différences minimales par rapport à la ou aux grandeurs prédéterminées (α0) de consigne de direction de roulage.

4. Dispositif (50) selon l'une des revendications précédentes, présentant une entrée (58c) de signaux conçue pour recevoir une déviation du véhicule, déterminée par un autre détecteur propre au véhicule et/ou une valeur de frottement, déterminée par l'autre détecteur propre au véhicule, de la chaussée sur laquelle il se déplace, le dispositif de commande (58) étant conçu pour lire dans le dispositif (58b) à mémoire le facteur de correction qui correspond à la déviation du véhicule et/ou à la valeur de frottement de la chaussée sur laquelle il se déplace parmi une quantité prédéterminée de facteurs de correction.

5. Procédé de commande d'une direction automatique (62) d'un véhicule (90), le procédé comportant les étapes suivantes :
a) réception d'une grandeur (α0) de consigne de direction de roulage prédéterminée par un système (52, 54) de commande automatique du véhicule (S10),
b) lecture d'un facteur de correction conservé en mémoire (S12),
c) détermination d'une grandeur de consigne de direction de roulage corrigée à l'aide du facteur de correction et de la grandeur prédéterminée (α0) de consigne de direction de roulage (S14),
d) branchement de la direction automatique (62) en un mode de maintien de la grandeur de consigne de direction de roulage corrigée (S16),
e) détermination d'une grandeur effective (α) de direction de roulage du véhicule (90) (S18),
f) comparaison entre la grandeur effective (α) de direction de roulage et la grandeur prédéterminée (α0) de consigne de direction de roulage (S20),
g) si la grandeur effective (α) de direction de roulage s'écarte d'au moins une différence minimale de la grandeur prédéterminée (α0) de consigne de direction de roulage, nouvelle détermination du facteur de correction en fonction de la comparaison (S22) et
h) conservation du facteur de correction en vue de répéter au moins une fois au moins les étapes a) à d) (S24).
